# EUROPEAN PATENT SPECIFICATION

(11) **EP 1 582 331 B1**
(45) Date of publication and mention of the grant of the patent: **17.06.2009**
(21) Application number: 05006676.0
(22) Date of filing: 25.03.2005
(51) Int. Cl.: B29C 45/16, B65D 51/28

(54) **Bottle cap**
Flaschenverschluss
Bouchon pour bouteille

(30) Priority: 29.03.2004 JP 2004095454; 09.08.2004 JP 2004232134
(43) Date of publication of application: 05.10.2005
(73) Proprietor: Makita, Masayuki, Matsumoto-shi Nagano-ken (JP); BZI Co., Ltd., Matsumoto-shi Nagano-ken (JP)
(72) Inventor: Makita, Masayuki, Matsumoto-shi Nagano-ken (JP)
(74) Representative: Hering, Hartmut

(56) References cited:
- EP-A- 1 477 421
- DE-A1- 2 753 737
- US-A- 4 386 696

## Description

The present invention relates to a bottle cap which has a raw material accommodating portion for accommodating a raw material in the form of powder or liquid and opens a lower end of the raw material accommodating portion in response to an unplugging operation to discharge the rawmaterial into abottle.

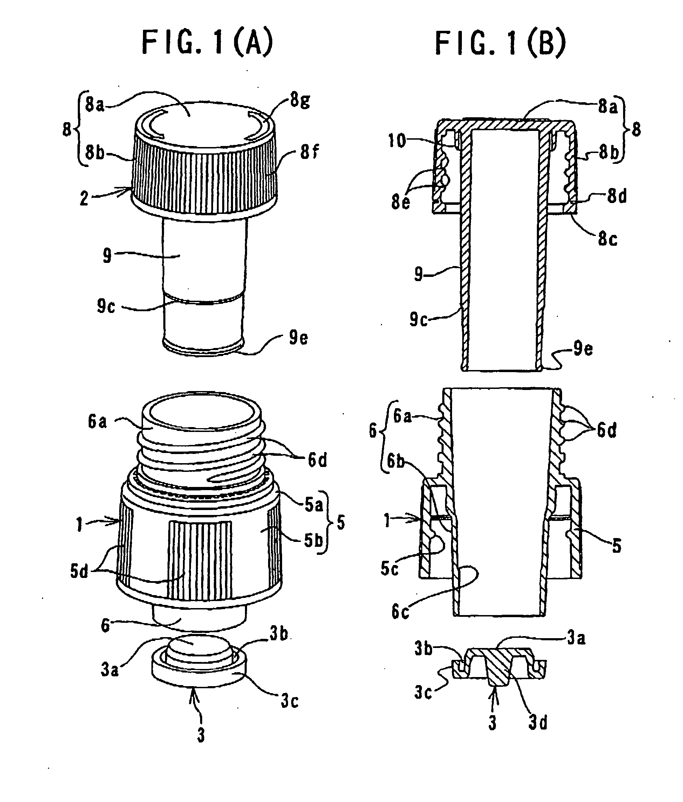

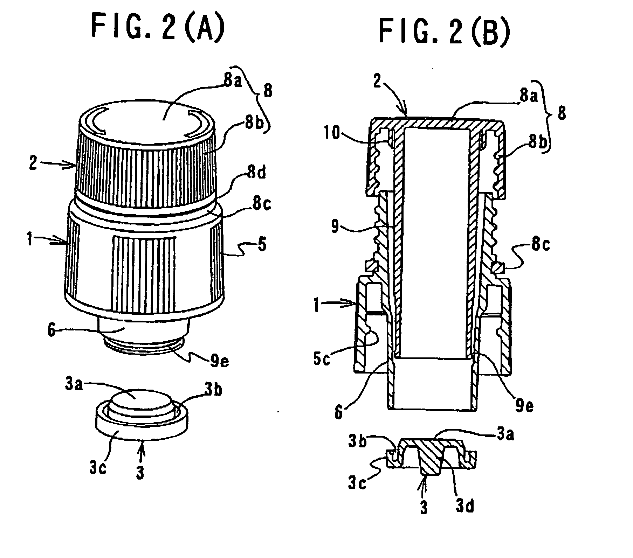

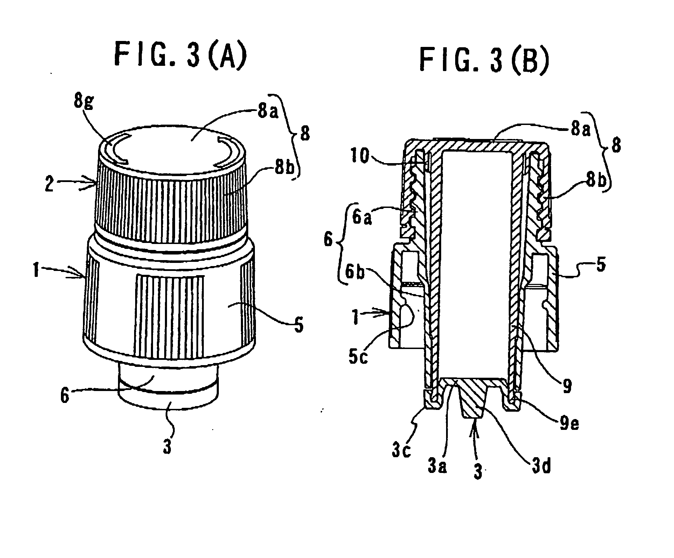

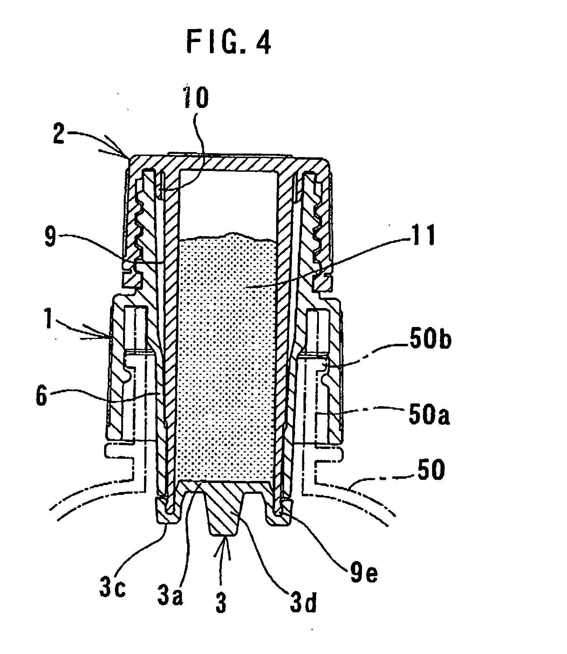

Abottle cap of the type mentioned is conventionally known and disclosed, for example, in Japanese Utility Model Publication No. S44-12957 (hereinafter referred to as Patent Document 1: particularly refer to page 1 of the specification and FIGS. 1 and 2) and Japanese Patent No. 3,281,730 (hereinafter referred to as Patent Document 2: particularly refer to page 2 of the specification and FIGS. 1 and 3). The inventor of the present invention has proposed and commercialized a bottle cap which overcomes drawbacks of the bottle caps of Patent Document 1 and Patent Document 2. The bottle cap is disclosed in Japanese Patent Laid-Open No. 2004-106888 (hereinafter referred to as Patent Document 3) and is shown in FIGS. 1(A) to 4 of the accompanying drawings. FIGS. 1(A), 1(B), 2(A) and 2(B) show the bottle cap before assembled while FIGS. 3(A) and 3(B) show the bottle cap in an assembled state, and FIG. 4 shows the bottle cap where it is set on a bottle.

Referring to FIGS. 1(A) to 4, the bottle cap shown includes a parent cap 1, a child cap 2 and a bottom lid 3 all formed by plastic molding.

The parent cap 1 includes a cap body 5 to be fitted with a mouth 50a of a bottle 50 (FIG. 4) such as a PET bottle, and an outer tube 6 open at the opposite upper and lower ends thereof and provided integrally with the cap body 5. The outer tube 6 is formed integrally with and extents upwardly and downwardly through a top portion 5a of the cap body 5, and an upper portion thereof which projects upwardly from the top portion 5a forms a mouth 6a which is open at an upper end thereof. Meanwhile, a lower portion of the outer tube 6 projecting downwardly from the top portion 5a forms a downwardly extending tubular portion 6b which cooperates with a body portion 5b of the cap body 5 to form a gap therebetween and extends downwardly from a lower end of the cap body 5. The downwardly extending tubular portion 6b is open at a lower end thereof. The downwardly extending tubular portion 6b has an offset in the proximity of the top portion 5a and has a reduced diameter at a portion thereof lower than the offset, and the reduced diameter portion gradually tapers to decrease the diameter thereof toward the lower end opening of the downwardly extending tubular portion 6b. A small stepped portion 6c is formed by increasing the material thickness of the downwardly extending tubular portion 6b a little at an intermediate portion of an inner circumferential face of the downwardly extending tubular portion 6b.

A female threaded portion 5c for engaging with a male threaded portion 50b of the mouth 50a of the bottle 50 is formed on an inner circumferential face of the body portion 5b of the cap body 5, and a male threaded portion 6d is formed on an outer circumferential face of the mouth 6a of the outer tube 6. Non-slip knurls 5d for preventing a slip when the body portion 5b is to be operated so as to be unplugged with fingers are formed on an outer circumference of the body portion 5b.

The child cap 2 includes a cap body 8, and an inner tube 9 provided integrally with and in a projecting manner from a lower face of a top 8a of the cap body 8 and serving as a raw material and pressure gas filling portion (capsule). The child cap 2 further includes an enclosing ring 10 having a small material thickness and provided integrally with and in a projecting manner from the lower face of the top 8a of the cap body 8 in the proximity of an outer circumference of the inner tube 9. The inner tube 9 cooperates with a body portion 8b of the cap body 8 to form a gap therebetween but projects much longer than the body portion 8b of the cap body 8. While the inner tube 9 has a diameter a little smaller than that of the outer tube 6 so that it can be inserted into the outer tube 6 with a very small gap left therebetween, it has a length a little longer than that of the outer tube 6. The inner diameter of the inner tube 9 is uniform from the top end to the bottom end of the inner tube 9, but the outer diameter of the inner tube 9 gradually decreases from the upper end to the lower end of the inner tube 9 such that the material thickness of the inner tube 9 gradually decreases. The inner tube 9 is swollen outwardly at a lower end edge thereof so as to form a flange 9e. Further, a very small stepped portion 9c which decreases the material thickness of the inner tube 9 a little is formed on an outer circumferential face of the inner tube 9.

An annular lower circumferential edge portion 8c of the body portion 8b of the child cap 2 can be separated at a thin cut 8d formed over an entire circumference of the lower circumferential edge portion 8c from the other portion of the body portion 8b above the cut 8d. A female threaded portion 8e for engaging with the male threaded portion 6d of the mouth 6a of the outer tube 6 is formed on an inner circumferential face of the body portion 8b. If the female threaded portion 8e is screwed with the stepped portion 6c and the child cap 2 is fitted with the mouth 6a of the outer tube 6 until the annular lower circumferential edge portion 8c compulsorily passes the terminal end of the male threaded portion 6d as seen in FIGS. 3(A) and 3(B), then the mouth 6a is sealed air-tightly and liquid-tightly. At this time, the child cap 2 is fixed at the annular lower circumferential edge portion 8c thereof against rotation to the mouth 6a, and the lower end portion of the inner tube 9 projects downwardly from the lower end opening of the downwardly extending tubular portion 6b of the outer tube 6 while the very small stepped portion 9c at an intermediate portion of the outer circumferential face of the inner tube 9 and the very small 6c at an intermediate portion of the inner circumferential face of the outer tube 6 are positioned closely in anupwardly and downwardly opposed relationship to each other. Then, if the enclosing ring 10 is further force fitted into the mouth 6a of the outer tube 6, then the top 8a of the child cap 2 is brought into pressure contact with the upper end of the outer tube 6 and the enclosing ring 10 cooperates with an angular portion of the body portion 8b of the child cap 2 to sandwich the mouth 6a of the outer tube 6 from inwardly and outwardly therebetween, respectively. Non-slip knurls 8f for preventing a slip when the body portion 8b is operated to be unplugged with fingers is embossed on an outer circumferential face of the body portion 8b, and arrow marks 8g indicating an opening direction are formed as a relief on the upper face of the top 8a.

The bottom lid 3 has a push-in portion 3a having a convex upper face and a concave lower face, an annular recessed portion 3c cooperating with a circumferential edge of the push-inportion 3a to form an annular recessed groove 3b of an inverted O-shaped cross section therebetween, and a projection 3d projecting downwardly from the center of the concave lower face of the push-in portion 3a. The push-in portion 3a, annular recessed portion 3c and projection 3d are formed integrally with each other. If a lower end portion of the inner tube 9 is compulsorily fitted into the annular recessed groove 3b and the push-in portion 3a is pushed into the inner tube 9, then the bottom lid 3 seals the lower end opening of the inner tube 9, in which pressure gas (inert gas) and raw material 11 are filled as seen in FIG. 4, air-tightly and liquid-tightly.

In the bottle cap having such a configuration as described above, if the child cap 2 is turned in an opening direction to move the inner tube 9 upwardly, then the upper edge of the annular recessed portion 3c of the bottom lid 3 is brought into contact with the lower end edge of the outer tube 6 to restrict further upward movement of the bottom lid 3. Consequently, the fitting between the flange 9e at the lower end of the outer tube 6 and the annular recessed portion 3c of the bottom lid 3 is released, and the bottom lid 3 drops from the inner tube 9 which further continues to further move upwardly. When the bottom lid 3 drops, the raw material 11 in the inner tube 9 spouts at a stroke together with the pressure gas. The bottom lid 3 sinks into liquid in the bottle.

However, the bottle cap described above has the following problems.
(1) Since the bottle cap includes three parts of the parent cap 1, child cap 2 and bottom lid 3 and particularly the parent cap 1 has a complicated structure, a high cost is required, and also an automatic cap mounting apparatus for automatically mounting the bottle cap on the mouth of a bottle is complicated in structure and operation.
(2) Since the parent cap 1 and the child cap 2 exhibit a state wherein they are placed one on the other at two stages on the outer side of the mouth 50a of the bottle 50, the overall height of the cap is as high as approximately twice that of an ordinary cap and also a trouble is likely to occur frequently as much.
(3) After the bottom lid 3 drops from the inner tube 9 as a result of unplugging of the child cap 2, usually the raw material 11 is drunk with only the child cap 2 removed from the parent cap 1 while the parent cap 1 remains on the mouth 50a of the bottle 50 so that the bottom lid 3 may not be drunk in error. However, even where such instructions are given, it actually has occurred that a user forcibly removes the parent cap 1 from the mouth of the bottle and holds the mouth of the bottle, from which the parent cap 1 has been removed, in the mouth thereof to drink the raw material 11, whereupon the user drinks the bottom lid 3 in error.
(4) Although it is tried to fit the swollen flange 9e at the lower end of the inner tube 9 of the child cap 2 into the annular recessed groove 3b, whichhas an inverted O-shaped cross section, of the annular recessed portion 3c of the bottom lid 3 to assure a high sealing property of the bottom lid 3 with respect to the lower end opening of the inner tube 9, this is not sufficient to assure the air-tightness of the outer tube 6 in which pressure gas is enclosed.
(5) Since part of the outer tube 6 of the parent cap 1, that is, the downwardly extending tubular portion 6b, remains projecting into the mouth of the bottom also after unplugging of the child cap 2 and the projecting portion disturbs flowing out of the liquid from the opening of the mouth of the bottle, the raw material 11 remains in the bottle without being drunk although the amount thereof small.
(6) The small cut 8d is formed over an entire circumference of the body portion 8b of the child cap 2 such that the upper portion of the child cap 2 with respect to the cut 8d is separated from the annular lower circumferential edge portion 8c on the lower side of the cut 8d and the annular lower circumferential edge portion 8c remains on the mouth of the bottle. However, since the separation of the upper portion and the lower portion of the body portion 8b requires considerably strong twisting force, there is the possibility that also the parent cap 1 may be turned and removed from the mouth of the bottle.

The intermediate document EP-A-1 477 421 relates to a sealing mechanism for a vessel and a method of sealing a vessel by means of said sealing mechanism.

The closest prior art document US-A-4 386 696 relates to a bottle cap as defined in the preamble of claim 1.

It is the object of the present invention to provide a bottle cap, wherein the bottom lid is allowed to be easily separated from the tubular portion.

This object is achieved by a bottle cap according to independent claim 1. The dependent claims 2 to 5 relate to advantageous further developments of the bottle cap of claim 1.

Especially, said bottom lid is molded as a separate member from said inner tubular portion of said cap body and has formed on a circumferential edge thereof an annular recessed portion into which a lower end portion of said inner tubular portion can be force fitted and a packing of a material softer than that of said annular recessed portion of said bottom lid is formed by simultaneous molding with said annular recessed portion in said annular recessed portion such that, when the lower end of said inner tube portion is fitted compulsorily into said annular recessed portion, said packing is compressed, and when said bottom lid is blocked from upward movement, the lower end of said inner tubular portion is pulled out from said annular recessed portion of said bottom lid to separate said bottom lid from the lower end of said inner tubular portion. a situation that the bottom lid is drunk in error by a user does not occur. Further, if the cap body is removed from the bottle mouth, then since also the inner tubular portion which serves as a raw material accommodating portion is removed integrally, such a situation that the raw material remains in the bottle without being drunk is prevented.

As a first form for the separation of the bottom lid from the lower end of the inner tubular portion of the cap body, the bottom lid and the inner tubular portion are formed as a unitary molded member with a cut formed therebetween such that, when the cap body is turned in the unsealing direction to pull out the inner tubular portion from the throat of the bottle, the bottom lid is separated at the cut from the lower end of the inner tubular portion.

With the bottle cap, since it is structured such that the bottom lid is molded integrally with the lower end of the inner tubular portion of the cap body and at least part of the bottom lid is separated from the lower end of the inner tubular portion at the cut thereof, no sealing problem occurs between the inner tubular portion and the bottom lid. Besides, the cost for molding can be reduced significantly.

As a second form for the separation of the bottom lid from the lower end of the inner tubular portion of the cap body, the bottom lid is removably molded by deposition to the lower end of the inner tubular portion using a plastic material different from that of the inner tubular portion such that, when the cap body is turned in an unsealing direction to pull out the inner tubular portion from the throat of the bottle, the bottom lid is separated at the deposited portion from the lower end of the inner tubular portion.

With the bottle cap, since the bottom lid is removably molded by deposition (different material simultaneous molding) using a plastic material different from that of the inner tubular portion of the cap body, no sealing problem occurs between the inner tubular portion and the bottom lid. Besides, the cost for molding can be reduced significantly.

In the first and second forms for the separation of the bottom lid from the lower end of the inner tubular portion of the cap body, a raw material entrance for the inner tubular portion is formed in the ceiling portion of the cap body and is closed up with an upper lid. The upper lid may be connected integrally to the ceiling portion of the cap body by a resiliently deformable hinge portion and is molded integrally with the cap body so that the bottle cap may be formed as a product of a single component. In this instance, an upper face of the upper lid may be covered with a sheet member adhered thereto together with an upper face of the ceiling portion around the upper lid.

With the bottle caps, since the raw material entrance is formed in the ceiling portion of the cap body and closed up with the upper lid, encapsulation of the raw material and pressure medium as well as free-oxygen absorber or the like into the inner tubular portion serving as a raw material

As a form for the separation of the bottom lid from the lower end of the inner tubular portion of the cap body, the bottom lid is molded as a separate member from the inner tubular portion of the cap body and has formed on a circumferential edge thereof an annular recessed portion into which a lower end portion of the inner tubular portion can be force fitted in order to removably seal the lower end opening of the inner tubular portion such that, when the cap body is turned in an unsealing direction to pull out the inner tubular portion from the throat of the bottle, the bottom lid is blocked from upward movement by the throat in the bottle and the annular recessed portion is pulled out from the lower end of the inner tubular portion to separate the bottom lid from the inner tubular portion.

In the form for the separation of the bottom lid from the lower end of the inner tubular portion of the cap body, in order to assure a high sealingproperty, a packing of a material softer than that of the annular recessed portion is formed integrally by simultaneous molding on an inner face of the annular recessed portion of the bottom lid. Preferably, the packing is embedded in the annular recessed portion in such a manner as to partly project from the inner face of the annular recessed portion.

With the bottle cap, where the packing of a soft material is provided by simultaneous molding on the inner face of the annular recessed portion of the bottom lid, when the lower end opening of the inner tubular portion is sealed with the bottom lid, since the lower end portion of the inner tubular member of the cap body is force fitted into the annular recessed portion and besides the packing is closely contacted with the lower end portion of the inner tubular portion in the annular recessed portion, the sealing property is enhanced significantly. Thus, even if pressure gas is enclosed in the inner tubular portion, the air-tightness can be assured sufficiently. Further, where the packing is embedded in the annular recessed portion, the integrity between the packing and the annular recessed portion is enhanced and also the molding property of the packing is enhanced.

The bottle cap may be configured such that a plurality of resiliently deformable unsealing projections or provided on the circumferential edge of the bottom lid and individually have a pawl-like shape or such that the reliantly deformable unsealing projection of the bottom lid has an annular shape whose outer diameter is changed by the resilient deformation. In the latter case, a large number of teeth whose projecting height decreases toward the lower end may be formed in a proj ectionmanner on an outer circumferential face of the annular unsealing projection so as to facilitate insertion of the bottom lid into the bottle.

Where a large number of teeth whose projecting height decreases toward the lower end are formed in a projection manner on the outer circumferential face of the annular unsealing projection, when the cap body is turned in the sealing direction to insert the inner tubular portion into the mouth of the bottle, the annular unsealing projection can be closed smoothly. Further, when the cap body is turned in the unsealing direction to pull out the inner tubular portion from the mouth of the bottle, the upper ends of the teeth can be engaged with the throat portion in the bottle to perform the separation of the bottom lid with certainty.

Preferably, an engaging projection is formed on the throat in the bottle for engaging with the unsealing projection of the bottom lid to block the upward movement of the bottom lid when the cap body is unsealed so that the separation of the bottom lid may be performed with certainty.

The bottle cap may be configured such that the cap body is molded from a hard plastic material, and a non-slip surface layer of a soft plastic material is formed integrally by simultaneous molding on an outer circumferential face of the outer tubular portion of the cap body. Preferably, the non- slip surface layer of the soft plastic is knurled.

Where the non-slip surface layer of a soft plastic material is formed integrally by simultaneous molding on the outer circumferential face of the outer tubular portion of the cap body molded from a hard plastic material, the non-slip effect upon an unplugging operation is high and pain to fingers can be moderated. Besides also molding is easy and the production cost can be reduced.

The above and other objects, features and advantages of the present invention will become apparent from the following description and the appended claims, taken in conjunction with the accompanying drawings in which like parts or elements are denoted by like reference symbols.

### BRIEF DESCRIPTION OF THE DRAWINGS

FIGS. 1 (A) and 1 (B) are a perspective view and an axial sectional view, respectively, showing a conventional bottle cap before assembled;
FIGS. 2 (A) and 2(B) are a perspective view and an axial sectional view, respectively, showing the conventional bottle cap in a somewhat assembled state;
FIGS. 3(A) and 3(B) are a perspective view and an axial sectional view, respectively, showing the conventional bottle cap in a fully assembled state;
FIG. 4 is an axial sectional view of the conventional bottle cap set in position on a bottle;
FIGS. 5 (A) and 5(B) are a perspective view and an axial sectional view, respectively, showing a bottle cap according to a first example not according to the present invention;
FIG. 6 is a bottom plan view of the bottle cap of the first example;
FIG. 7 is an exploded perspective sectional view of the bottle cap of the first example;
FIG. 8 is an axial sectional view of the bottle cap of the first example immediately before mounted on a bottle;
FIG. 9 is an axial sectional view of the bottle cap of the first example fully mounted on the bottle;
FIG. 10 is an axial sectional view of the bottle cap of the first example when it is unsealed;
FIGS. 11(A) and 11(B) are a perspective view and an axial sectional view, respectively, showing a modification to the bottle cap of the first example;
FIGS. 12 (A) and 12 (B) are a perspective view and an axial sectional view, respectively, showing a bottle cap according to a second example as an embodiment of the present invention in a state wherein a cap body and a bottom lid are assembled;
FIG. 13 is an exploded perspective view of the cap body and the bottom lid of the bottle cap of the second example with the cap body shown in section;
FIG. 14 is an axial sectional view of the bottle cap of the second example in an assembled state while it is being mounted on a bottle;
FIG. 15 is an axial sectional view of the bottle cap of the second example mounted on the bottle;
FIG. 16 is an axial sectional view of the bottle cap of the second example when it is unsealed;
FIG. 17 is an axial sectional view showing a modification to the bottle cap of the second example in a state wherein it is mounted on a bottle;
FIG. 18 is a perspective view showing a modified bottom lid which may be used in the bottle cap of the second example;
FIG. 19 is an axial sectional view showing a modification to the bottle cap of the second example wherein a cap body is separated into upper and lower portions upon unsealing;
FIG. 20 is a perspective sectional view showing a bottle cap according to a third example not according to the present invention;
FIG. 21 is an axial sectional view of the bottle cap of the third example when it is being mounted on a bottle;
FIG. 22 is an axial sectional view of the bottle cap of the third example in a state while it is mounted on the bottle;
FIG. 23 is a perspective sectional view showing a bottle cap according to a fourth example not according to the present invention;
FIG. 24 is an enlarged axial sectional view of part of the bottle cap of the fourth example;
FIG. 25 is a perspective sectional view showing a modification to the bottle cap of the fourth example;
FIG. 26 is an enlarged axial sectional view of part of the modified bottle cap of FIG. 25;
FIGS. 27 (A) and 27(B) are a perspective view and an axial sectional view, respectively, showing another modification to the bottle cap of the first example; and
FIG. 28 is an exploded sectional perspective view of the modified bottle cap of FIGS. 27(A) and 27(B).

### First Example

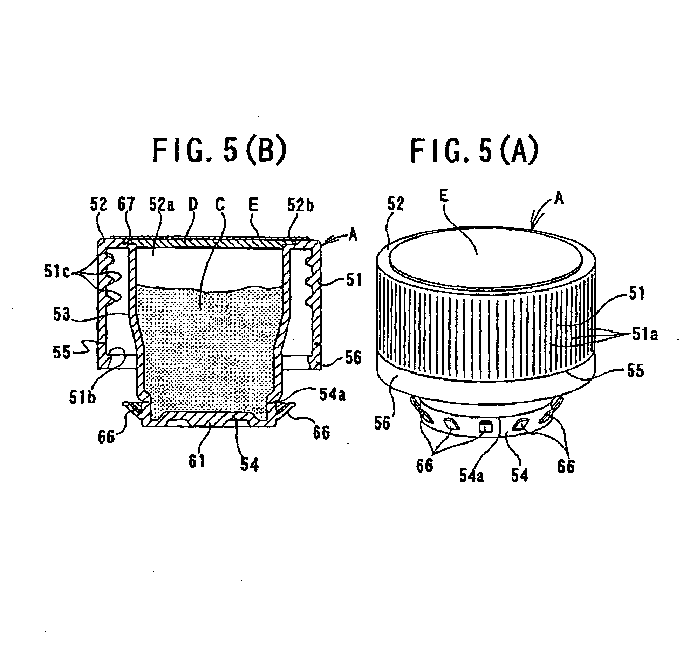

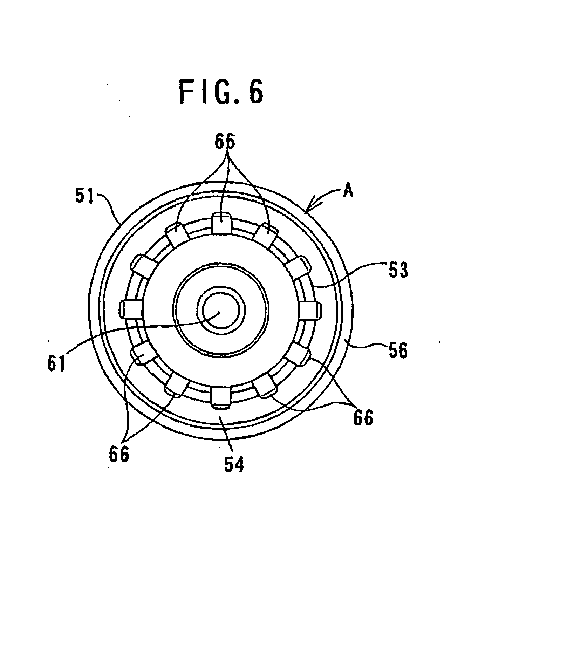

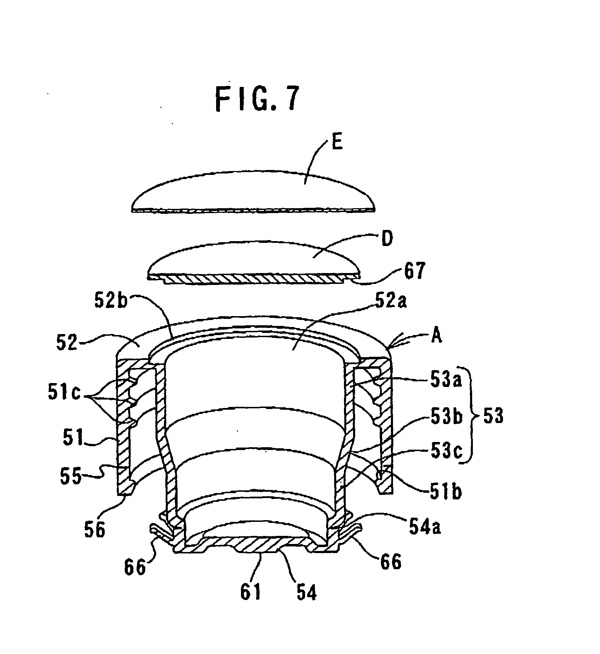

Referring to FIGS. 5(A), 5(B), 6 and 7, there is shown a bottle cam according to a first example not according to the present invention. The bottle cap shown includes two parts of a cap body A molded as a unitary member from a hard plastic material and an upper lid D in the form of a disk molded as a unitary member from a hard plastic material but separately from the cap body A. Further, as occasion demands, a sheet member E is applied to the upper lid D.

The cap body A is formed as a unitary molded member and includes an outer tube portion 51, a ceiling portion 52 having a circular raw material supplying entrance 52a, an inner tube portion 53 extending downwardly from the ceiling portion 52, and a bottom lid 54 at a lower end of the inner tube portion 53. A threaded portion 51c for engaging with a threaded portion 50b provided on an outer circumferential face of a mouth 50a of the bottle 50 is formed on an inner circumference of the outer tube portion 51. Further, a thin cut 55 is formed along an entire circumference at a lower circumferential edge portion of the outer tube portion 51 so that a portion of the outer tube portion 51 on the upper side of the cut 55 canbe compulsorily separated from an annular lower circumferential edge portion 56 of the outer tube portion 51 on the lower side of the cut 55. The inner circumferential face of the lower circumferential edge portion 56 below the cut 55 is formed as an inclined face, and an annular stepped portion 51b is formed on the upper side of the inclined face. Non-slip knurls (vertical ribs) 51a for being operated by fingers to unplug the bottle cap are embossed at the upper side portion of the outer circumferential face of the outer tube portion 51 with respect to the cut 55.

The inner tube portion 53 serves as a portion (capsule) in which a raw material and pressure gas are to be filled and extends downwardly integrally from a stepped portion 52b formed along an opening circumferential edge of the raw material supplying entrance 52a of the ceiling portion 52. The inner tube portion 53 has a length sufficient to extend from within the mouth 50a into a bottle body portion 50d farther than a throat portion 50c in the bottle. An upper side portion 53a of the inner tube portion 53 has a size with which an outer circumferential face of the upper side portion 53a closely contacts with an inner circumferential face of the mouth 50a. Meanwhile, an intermediate portion 53b of the inner tube portion 53 gradually decreases in diameter downwardly until a lower side portion 53c of the inner tube portion 53 has a size with which a gap is formed between the inner circumferential face of the mouth 50a and the throat portion 50c in the bottle.

Although the bottom lid 54 is formed integrally with the inner tube portion 53 such that it closes up the lower end of the inner tube portion 53, it can be separated from the inner tube portion 53 at the cut 54a formed on the outer circumferential face of the inner tube portion 53. A plurality of unsealing projections 66 each in the form of a resilient pawl are formed obliquely upwardly and generally radially integrally on the outer circumferential face of the bottom lid 54. The unsealing projections 66 function as stoppers for allowing the bottom lid 54 to separate from the inner tube portion 53 at the bottom lid 54 as hereinafter described. A projection 61 having a circular truncated conical shape is formed integrally at the center of the lower face in the form of a concave face of the bottom lid 54 such that it projects downwardly.

The upper lid D has a disk-like shape and has a stepped portion 67 formed on a circumferential edge of a lower face thereof. The upper lid D closes up the raw material supplying entrance 52a after the raw material C is supplied into the inner tube portion 53 together with pressure gas, and thereupon, the stepped portion 67 of the upper lid D and the stepped portion 52b at the opening circular edge of the raw material supplying entrance 52a are fitted with each other and the fitting portions of them are adhered to each other by a bonding agent such as for example, a hot melt adhesive. Then, a sheet member E such as, for example, a paper seal is applied to the upper lid D to cover the upper face of the upper lid D together with an upper face of the ceiling portion 52 around the sheet member E. This makes it possible to raise the sealing property between the upper lid D and the raw material supplying entrance 52a and conceal the fact that the raw material supplying entrance 52a is closed up with the upper lid D.

The raw material C to be accommodated in the inner tube portion 53 may be various kinds of powder, granules, tablets and liquid including green tea, coffee, concentrated minerals, minerals extracted from sea deep water, healthy food, drug, syrup, dairy product, alcohol, concentrated vegetable, soup raw material, vitamins, sugars, herbs and yeast. Meanwhile, the pressure gas preferably is inert gas which can maintain the quality of the raw material C in safety and may be, for example, nitrogen gas, helium gas, argon gas, carbon dioxide gas, nitrogen monoxide gas or mixture gas of them. Or, a free-oxygen absorber may be encapsulated.

In order to mount the bottle cap of the first example having such a configuration as described above on the mouth 50a of the bottle 50, the bottle cap is pushed into the bottle mouth 50a with the bottom lid 54 directed downwardly until the inner tube portion 53 is inserted fully in the bottle mouth 50a, and the cap body A is turned in the sealing direction. When the bottom lid 54 is pushed into the bottle mouth 50a, since the radial unsealing projections 66 are inclined obliquely upwardly, the unsealing projections 66 are resiliently deformed into a contracted state to allow the bottle mouth 50a to be pushed in smoothly, and while the unsealing projections 66 slidably contact with the inner circumferential face of the bottle mouth 50a, the inner tube portion 53 can be inserted into the bottle mouth 50a.

Thus, while the cap body A is turned in the sealing direction, the threaded portion 51c of the outer tube portion 51 thereof is screwed with the male threaded portion 50b of the bottle mouth 50a and then screwed compulsorily until the annular stepped portion 51b on the inner circumferential face of the outer tube portion 51 passes an annular projection 50e on the outer circumferential face of the bottle mouth 50a. Thereupon, since the inner face of the lower circumferential edge portion 56 of the outer tube portion 51 is formed as an inclined face, the annular steppedportion 51b passes the annular projection 50e smoothly and is engaged with the flat lower face of the annular projection 50e.

On the other hand, in the bottle mouth 50a, since the inner tube portion 53 is sufficiently long to project into the bottle body portion 50d, the bottom lid 54 passes the throat portion 50c in the bottle, whereupon the unsealing projections 66 restore their open state and are engaged with the lower face of the throat portion 50c.

The bottle mouth 50a is sealed in this state with the bottle cap.

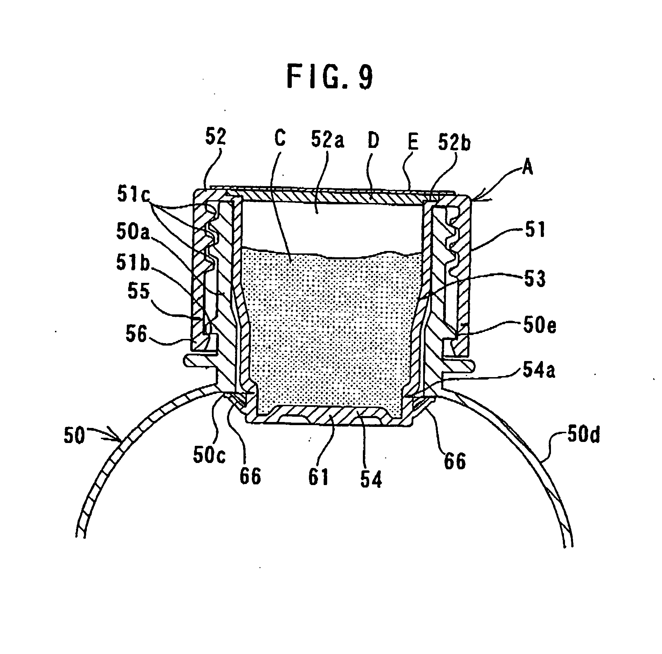

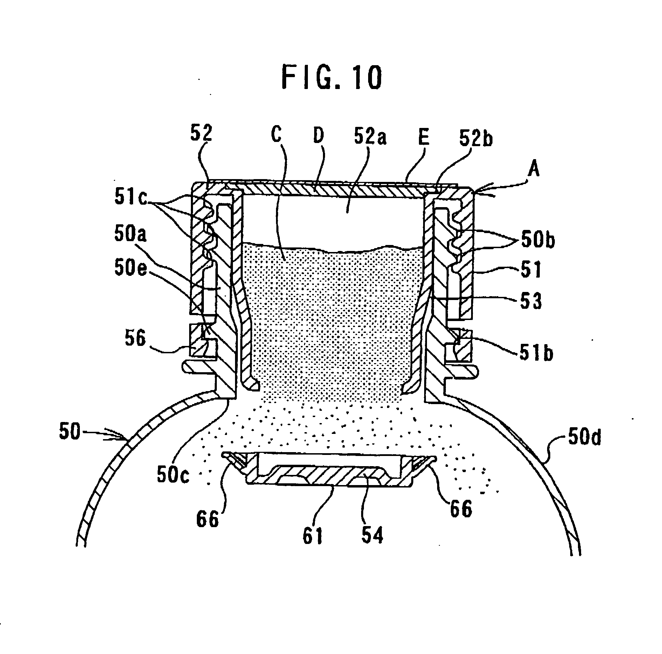

If the cap body A is turned in the unsealing direction while the bottle mouth 50a is in such a sealed state, then although the upper side portion of the outer tube portion 51 with respect to the cut 55 can move upwardly as seen in FIG. 9, since the lower circumferential edge portion 56 on the lower side with respect to the cut 55 is held in engagement at the annular stepped portion 51b thereof with the lower face of the annular projection 50e, it cannot move upwardly. Consequently, the lower circumferential edge portion 56 is separated from the upper side portion of the outer tube portion 51 at the cut 55 and remains on the bottle mouth 50a as seen in FIG. 10.

Accordingly, since the cap body A cannot be turned unless force sufficient to compulsorily give rise to such separation is applied thereto, the sealing state can be maintained with certainty.

On the other hand, in the bottle mouth 50a, since the cap body A is turned in the unsealing direction, while the inner tube portion 53 moves upwardly while it is turned, the bottom lid 54 cannot move upwardly because the unsealing projections 66 thereof are in an open state and are held in engagement with the lower face of the throat portion 50c. Consequently, the bottom lid 54 is separated at a cut 54a from the inner tube portion 53 which is further moved upwardly, and drops as seen in FIG. 10. When the bottom lid 54 drops, the raw material C in the inner tube portion 53 is spouted at a stroke together with the pressure gas, and the bottom lid 54 sinks into the liquid in the bottle 50. Since the bottom lid 54 has the projection 61 on the lower face thereof, it does not sink swaying back and forth by a great amount.

Since the dropping bottom lid 54 has an outer diameter at radial ends of the unsealing projections 66 thereof, which restore an open state thereof, than the inner diameter of the bottle mouth 50a, it does not pass the mouth 50a to go out from the bottle.

It is to be noted that the cut 54a may not be formed over an entire circumference but be formed except part of an entire circumference such that the bottom lid 54 is not separated at the portion from the lower end of the inner tube portion 53 so that the lower end of the inner tube portion 53 may open in a state wherein the bottom lid 54 extends downwardly from the lower end of the inner tube portion 53 without dropping from the same.

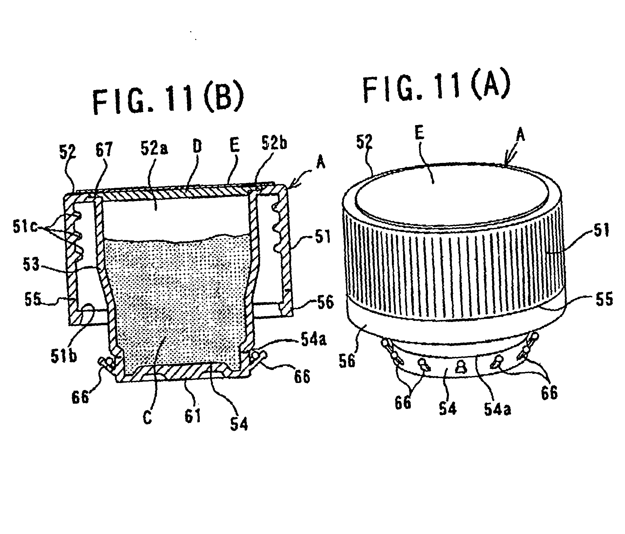

FIG. 11 shows a modification to the bottle cap of the first example described above. Referring to FIG. 11, in the modified bottle cap shown, each of the unsealing projections 66 has a spherical end. Where the unsealing projections 66 have the configuration just described, the bottle cap can be inserted into the bottle mouth 50a more smoothly without damaging the inner circumferential face of the bottle mouth 50a.

### Second Example

Now, a bottle cap according to a second example as an embodiment of the present invention is described.

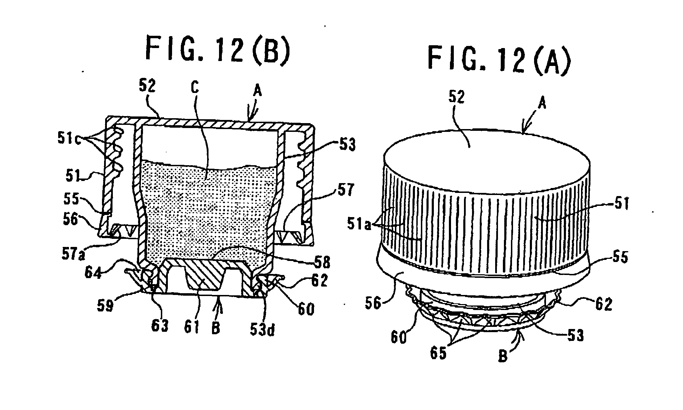

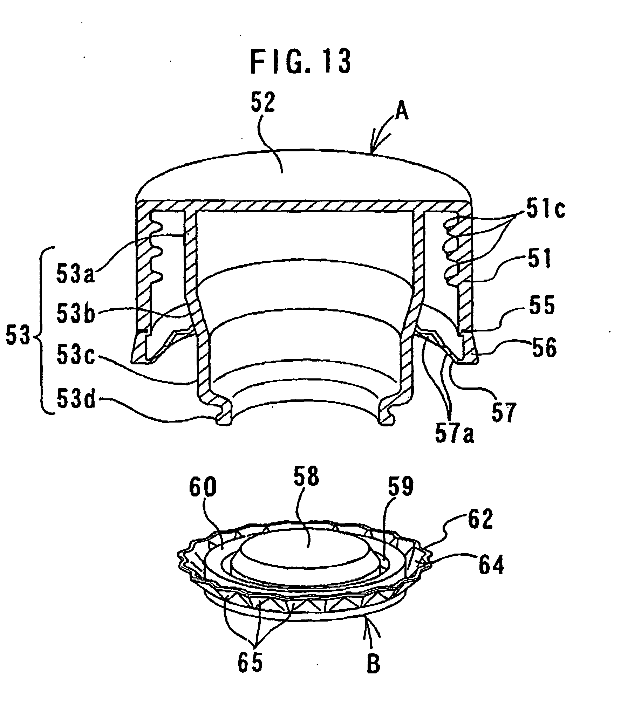

Referring to FIGS. 12(A), 12(B) and 13, the bottle cap of the second example includes two parts of a cap body A molded as a unitary member from a hard plastic material and a bottom lid B molded as a separate unitary member from a hard plastic material.

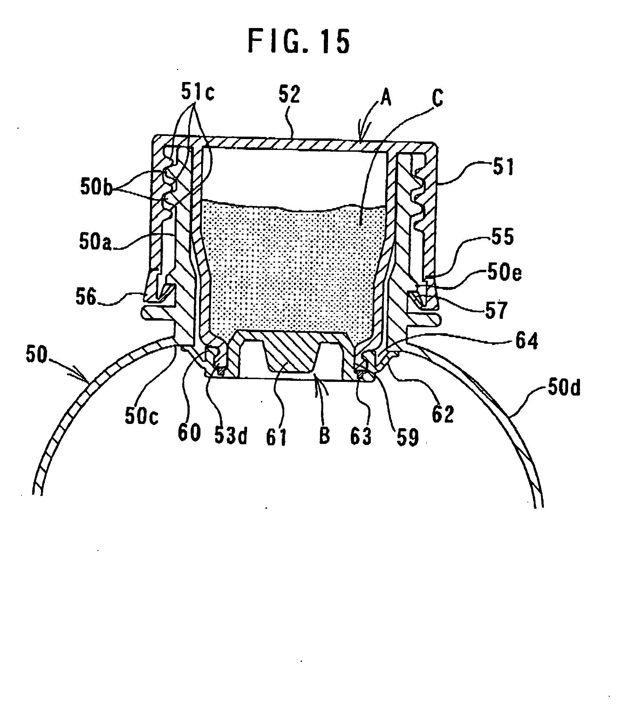

The cap body A is a molded unitary member including an outer tube portion 51, a ceiling portion 52, and an inner tube portion 53 extending downwardly from the ceiling portion 52. A threaded portion 51c for engaging with a threaded portion 50b provided on an outer circumferential face of a mouth 50a of a bottle 50 such as a PET bottle shown in FIG. 15 is formed on an inner circumference of the outer tube portion 51. Further, a thin cut 55 is formed along an entire circumference at a lower circumferential edge portion of the outer tube portion 51 so that a portion of the outer tube portion 51 on the upper side with respect to the cut 55 can be compulsorily separated from an annular lower circumferential edge portion 56 of the outer tube portion 51 on the lower side with respect to the cut 55. A resilient inner side annular projection 57 is formed in a projecting manner on an entire inner circumferential face of the lower circumferential edge portion 56, and a large number of teeth 57a are formed in a projecting manner in a waveform configuration in a predetermined spaced relationship from each other over an entire circumference. Each of the teeth 57a has a triangular shape such that the projecting height thereof decreases toward a lower end thereof. Non-slipknurls (vertical ribs) 51a for being operated by fingers to unplug the bottle cap is embossed on an outer circumference face of the outer tube portion 51 above the cut 55.

The inner tube portion 53 extends downwardly integrally from a lower face of the ceiling portion 52 and has a length sufficient to extend from within the bottle mouth 50a into the bottle body portion 50d farther than a throat portion 50c in the bottom. An upper side portion 53a of the inner tube portion 53 has a size with which an outer circumferential face thereof closely contacts with an inner circumferential face of the mouth 50a. Meanwhile, a lower side portion 53c of the inner tube portion 53 has a size with which a gap is formed between the inner circumferential face of the bottle mouth 50a and the throat portion 50c in the bottle. Further, a lower end edge of the inner tube portion 53 is formed as a flange 53d swollen to the outer side.

The bottom lid B is formed as a molded unitary member including a push-in portion 58 having a convex upper face and a concave lower face, an annular recessed portion 60 cooperating with a circumferential edge of the push-in portion 58 to form an annular recessed groove 59 of an inverted omega-shaped cross section, a projection 61 of a circular truncated conical shape extending downwardly from the center of the concave lower face of the push-in portion 58, and an annular unsealing projection 62 pro j ecting obliquely upwardly from an outer face of the annular recessed portion 60.

In the annular recessed portion 60 of the bottom lid B, an annular packing 63 made of a softer material than that of the annular recessed portion 60 such as, for example, silicon rubber or propylene rubber is formed integrally on the inner face of the annular recessed portion 60 by simultaneous molding with the annular recessed portion 60. The packing 63 is particularly embedded in a bottom portion of and integrated with the annular recessed portion 60 such that part thereof projects from the inner face of the annular recessed portion 60.

The annular unsealing projection 62 of the bottom lid B is provided with resiliency by a depression 64 formed at a root portion of the unsealing projection 62, that is, between the unsealing projection 62 and the annular recessed portion 60 such that it can be resiliently deformed so as to open and close with respect to the annular recessed portion 60 (expanded outwardly and contracted inwardly). In the open state which is an ordinary state, the unsealing projection 62 has an outer diameter greater than the inner diameter of the mouth 50a. A large number of teeth 65 are formed in a projecting manner in a waveform configuration in a predetermined spaced relationship from each other over an entire circumference of an outer circumferential face of the unsealing projection 62. Each of the teeth 65 has a triangular shape such that the projecting height thereof decreases toward a lower end thereof.

The bottle cap of the second example as embodiment having such a configuration as described above is assembled in the following manner.

As seen in FIG. 12, the annular recessed groove 59 of an inverted omega-shaped cross section of the annular recessed portion 60 of the bottom lid B and the swollen flange 53d at the lower end of the inner tube portion 53 of the cap body A are fitted compulsorily with each other so that the projecting portion of the packing 63 is compressed by the lower end of the inner tube portion 53. Consequently, the swollen flange 53d at the lower end of the inner tube portion 53 is press fitted in the annular recessed groove 59 of an inverted omega-shaped cross section while the projecting portion of the packing 63 remains compressed. Therefore, the closing up of the lower end opening of the inner tube portion 53 with the bottom lid B provides a very high sealing performance, and even if pressure gas is encapsulated in the inner tube portion 53, the air-tightness thereof can be assured sufficiently.

After the raw material C is supplied into the inner tube portion 53 of the cap body A together with pressure gas and the lower end opening of the inner tube portion 53 is closed up with the bottom lid B in such a manner as described above, the cap body A is inserted into the bottle mouth 50a beginning with the bottom lid B thereof to insert the inner tube portion 53 into the bottle mouth 50a and the cap body A is turned in the sealing direction. While the bottom lid B is being pushed into the bottle mouth 50a, since the large number of teeth 65 on the outer circumferential face of the unsealing projection 62 have a projecting height which decreases to the lower end thereof, while the unsealing projection 62 is pushed in smoothly, it is resiliently deformed into a contracted state (closed state), and while the teeth 65 slidably contact with the inner circumferential face of the bottle mouth 50a, the inner tube portion 53 can be inserted into the bottle mouth 50a following the bottom lid B.

While the cap body A is turned in the sealing direction, the threaded portion 51c of the outer tube portion 51 thereof isbrought into meshing engagement with the male threaded portion 50b of the bottle mouth 50a and then screwed with the threaded portion 50b until the inner side annular projection 57 of the outer tube portion 51 passes the annular projection 50e of the outer circumferential face of the bottle mouth 50a as seen in FIG. 15. At this time, since the large number of teeth 57a whose projecting height decreases to the lower end thereof are formed on the inner circumferential face of the lower circumferential edge portion 56 of the outer tube portion 51 and the upper face of the annular projection 50e is formed as an inclined face, the teeth 57a pass the annular projection 50e smoothly and the inner side annular projection 57 is brought into engagement with a flat lower face of the annular projection 50e.

On the other hand, in the bottle mouth 50a, since the inner tube portion 53 has a length sufficient to project into the bottle body portion 50d, the bottom lid B passes the throat portion 50c in the bottle and the unsealing projection 62 thereof restores its open state and is engaged with the lower face of the throat portion 50c.

The bottle mouth 50a is sealed in this state.

If the cap body A is turned in the unsealing direction while the bottle mouth 50a is in such a sealed state as described above, although the portion of the outer tube portion 51 on the upper side with respect to the cut 55 can move upwardly, the lower circumferential edge portion 56 below the cut 55 cannot move upwardly because the inner side annular projection 57 thereof is held in engagement with the lower face of the annular projection 50e. Consequently, the lower circumferential edge portion 56 is separated from the upper side portion of the outer tube portion 51 at the cut 55 and remains at the position.

Accordingly, since the cap body A cannot be turned unless force sufficient to compulsorily cause such separation is applied, the sealing state of the cap body A can be maintained with certainty.

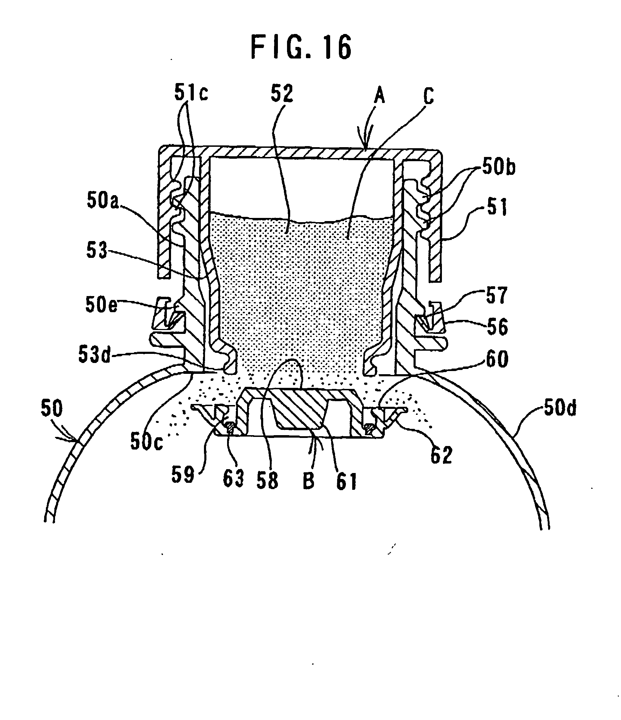

On the other hand, in the bottle mouth 50a, when the cap body A is turned in the unsealing direction, while the inner tube portion 53 moves upwardly while being turned, the bottom lid B cannot move upwardly because the unsealing projection 62 thereof is in an open state and remains in engagement with the lower face of the throat portion 50c. Consequently, the bottom lid B is separated from the inner tube portion 53 which further continues to move upwardly, and drops from the inner tube portion 53 as seen in FIG. 16. When the bottom lid B drops, the raw material C in the inner tube portion 53 is spouted at a stroke together with the pressure gas, and the bottom lid B sinks into the liquid in the bottle 50. Since the bottom lid B has the projection 61 on the lower face thereof, it does not sink swaying back and forth by a great amount.

Since the dropping bottom lid B has an outer diameter at the unsealing projection 62 thereof, which restores an open state thereof, than the inner diameter of the bottle mouth 50a, it does not pass the bottle mouth 50a to go out from the bottle.

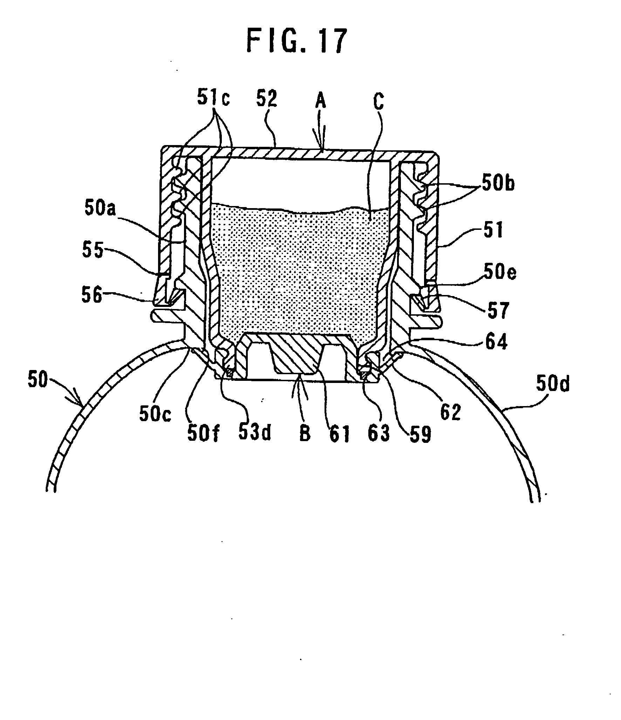

It is to be noted that, if a projection or rib 50f is formed on a circumferential edge of the throat portion 50c in the bottle as seen in FIG. 17, then since the unsealing projection 62 of the bottom lid B engages with the projection or rib 50f, dropping of the bottom lid B can be performed with certainty.

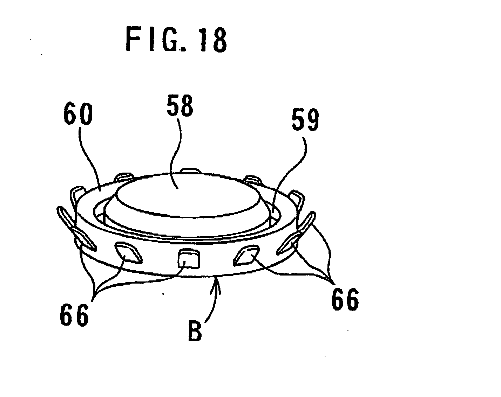

Further, the unsealing projection 62 may not be formed in an annular shape, but may be divided in a circumferential direction such that it includes a plurality of unsealing projections 66 each in the form of a resilient pawl as seen in FIG. 18. The unsealing projections 66 are provided in a radially projecting manner obliquely upwardly integrally from an outer circumferential face of the annular recessed portion 60.

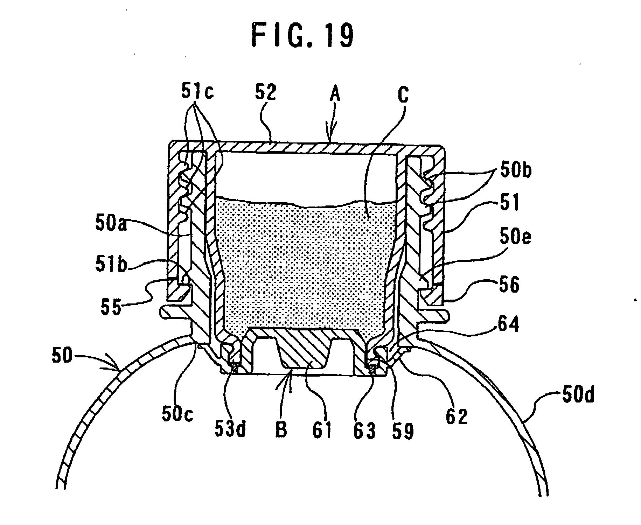

Further, while the cap body A in the second example as embodiment is configured such that the resilient inner side annular projection 57 having a large number of teeth 57a formed thereon is formed on a lower end circumferential edge of the outer tube portion 51, the cap body A may otherwise have such a structure as shown in FIG. 19. In particular, the inner circumferential face of the lower circumferential edge portion 56 of the outer tube portion 51 on the lower side with respect to the cut 55 is formed as an inclined face, and an annular stepped portion 51b is formed on the upper side of the lower circumferential edge portion 56 with respect to the inclined face. When the cap body A is placed into the sealing state, the lower circumferential edge portion 56 passes the annular projection 50e of the bottle mouth 50a and the annular stepped portion 51b is engaged with the annular projection 50e. Consequently, when the cap body A is opened, the cap body A is separated into the upper and lower portions at the cut 55 thereof.

### Third Example

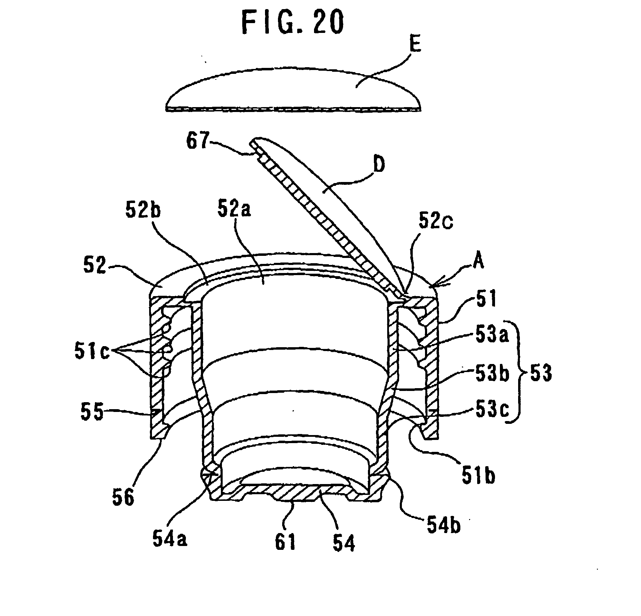

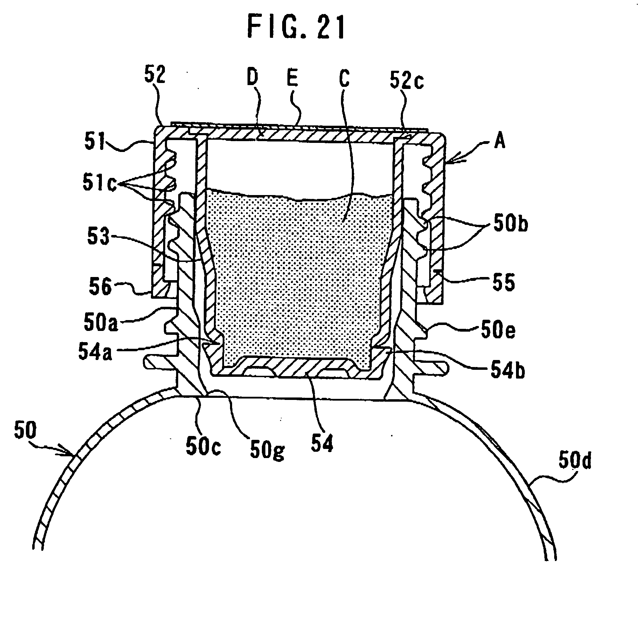

Now, a bottle cap according to a third example not according to the present invention is described with reference to FIGS. 20 to 23.

The bottle cap of the third example is composed of a single part formed as a molded unitary member made of a hard plastic material and including a cap body A and an upper lid D in the form of a disk. A sheet member E is adhered to the upper lid D as occasion demands.

The cap body A is formed as a unitary member molded together with the upper lid D by simultaneous molding and includes an outer tube portion 51, a ceiling portion 52 having a circular raw material supplying entrance 52a, an inner tube portion 53 extending downwardly from the ceiling portion 52, and a bottom lid 54 at a lower end of the inner tube portion 53 similarly as in the bottle cap of the first example. A threaded portion 51c for engaging with a threaded portion 50b provided on an outer circumferential face of a bottle mouth 50a of the bottle 50 is formed on an inner circumference of the outer tube portion 51. Further, a thin cut 55 is formed along an entire circumference at a lower circumferential edge portion of the outer tube portion 51 so that a portion of the outer tube portion 51 on the upper side of the cut 55 can be compulsorily separated from an annular lower circumferential edge portion 56 of the outer tube portion 51 on the lower side of the cut 55. The inner circumferential face of the lower circumferential edge portion 56 below the cut 55 is formed as an inclined face, and an annular stepped portion 51b is formed on the outer side of the inclined face. Non-slip knurls (vertical ribs) for being operated by fingers to unseal the bottle cap are embossed at the upper side portion of the outer circumferential face of the outer tube portion 51 with respect to the cut 55.

The inner tube portion 53 extends downwardly integrally from a stepped, portion 52b formed along an opening circumferential edge of the raw material supplying entrance 52a of the ceiling portion 52 similarly as in the bottle cap of the first example. The inner tube portion 53 has a length sufficient to extend from within the bottle mouth 50a into the bottle body portion 50d farther than a throat portion 50c in the bottle. An upper side portion 53a of the inner tube portion 53 has a size with which an outer circumferential face of the upper side portion 53a closely contacts with an inner circumferential face of the bottle mouth 50a. Meanwhile, an intermediate portion 53b of the inner tube portion 53 gradually decreases the diameter thereof downwardly until a lower side portion 53c of the inner tube portion 53 has a size with which a gap is formed between the inner circumferential face of the bottle mouth 50a and the throat portion 50c in the bottle.

Although the bottom lid 54 is formed integrally with the inner tube portion 53 such that it closes up the lower end of the inner tube portion 53, it can be separated from the inner tube portion 53 at a cut 54a formed on the outer circumferential face thereof. The cut 54a is shaped to open outwardly. An annular unsealing projection 54b is formed integrally along an entire circumference of the bottom lid 54 on the lower side of the cut 54a such that the thickness thereof gradually decreases downwardly so at to form the outer circumferential face as an inclined face. The unsealing projection 54b is resiliently deformable due to the cut 54a opened outwardly.

The upper lid D has a disk-like shape and has a stepped portion 67 formed on a circumferential edge of a lower face thereof similarly as in the bottle cap of the first example. However, part of the ceiling portion 52 of the cap body A is formed as a hinge portion 52c as the upper lid D is formed as a molded member integrated with the cap body A through the hinge portion 52c. Since the hinge portion 52c is formed restrictively at a portion of the ceiling portion 52, it is resiliently deformable, and the upper lid D is movable to close up and open the raw material supplying entrance 52a. Also the upper lid D is used such that the stepped portion 67 thereof and the stepped portion 52b at the opening circumferential edge of the raw material supplying entrance 52a are fitted with each other and the fitting portions of them are adhered to each other by a bonding agent such as for example, a hot melt adhesive. Then, a sheet member E is applied to the upper lid D to cover the upper face of the upper lid D together with an upper face of the ceiling portion of the ceiling portion,52 around the sheet member E.

Meanwhile, an engaging projection 50g is formed integrally on an inner circumferential face of the throat portion 50c in the bottle such that the thickness thereof gradually increases downwardly so as to form the inner circumferential face of the throat portion 50c as an inclined face.

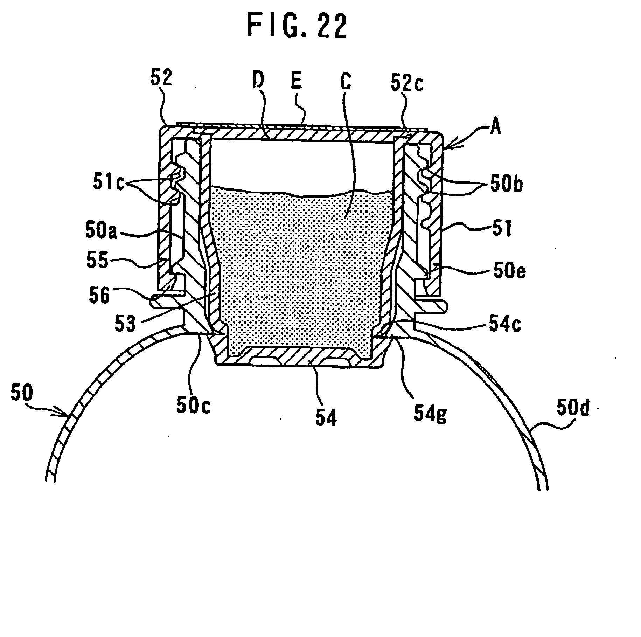

In order to mount the bottle gap of the third example on the bottle mouth 50a of the bottle 50, while the cap body A is turned in the sealing direction, the threaded portion 51c of the outer tube portion 51 thereof is screwed with the male threaded portion 50b of the bottle mouth 50a and then screwed compulsorily until the annular stepped portion 51b on the inner circumferential face of the outer tube portion 51 passes the annular projection 50e on the outer circumferential face of the bottle mouth 50a as seen in FIG. 22. Thereupon, since the inner circumferential face of the lower circumferential edge portion 56 of the outer tube portion 51 is formed as an inclined face, the bottle mouth 50a climbs over the annular projection 50e smoothly and the annular stepped portion 51b is engaged with the flat lower face of the annular projection 50e.

At this time, in the bottle mouth 50a, the inclined face of the unsealing projection 54b on an outer circumference of the bottom lid 54 passes, at a timing near to the end of the movement of the cap body A, the inclined face of the engaging projection 50g while it slidably contacts with the inclined face of the engaging projection 50g on the inner circumference of the throat portion 50c of the bottle 50. Finally, the unsealing projection 54b of the bottom lid 54 is engaged with the engaging projection 50g on the lower side thereof and the engaging projection 50g of the throat portion 50c enters a little into the expanded mouth of the cut 54a of the bottom lid 54. When the state just described is reached, the bottle mouth 50a is sealed.

Then, if the cap body A is turned in the unsealing direction while the bottle mouth 50a is in such a sealed state, then although the upper side portion of the outer tube portion 51 with respect to the cut 55 can move upwardly, since the lower circumferential edge portion 56 on the lower side with respect to the cut 55 is held in engagement at the annular stepped portion 51b thereof with the lower face of the annular projection 50e, it cannot move upwardly similarly as in the bottle cap of the first example. Consequently, the lower circumferential edge portion 56 is separated from the upper side portion of the outer tube portion 51 at the cut 55 and remains on the bottle mouth 50a.

On the other hand, in the bottle mouth 50a, when the cap body A is turned in the unsealing direction, while the inner tube portion 53 moves upwardly while being rotated, the bottom lid 54 cannot move upwardly because the unsealing projection 54b thereof is held in engagement with the lower face of the engaging projection 50g of the throat portion 50c. Consequently, the bottom lid 54 is separated at the cut 54a from the inner tube portion 53 which continues to further move upwardly, and drops from the inner tube portion 53.

Since the dropping bottom lid 54 is greater in size at the unsealing projection 54b thereof than the inner diameter of the throat portion 50c, it does not pass through the bottle mouth 50a and go out to the outside of the bottle.

It is to be noted that, also in the bottle cap of the third example, the cut 54a may not be formed over an overall circumference but be formed except part of an overall circumference such that the bottom lid 54 is not separated at the portion from the lower end of the inner tube portion 53 so that the lower end of the inner tube portion 53 may open in a state wherein the bottom lid 64 extends downwardly from the lower end of the inner tube portion 53 without dropping from the same.

### Example 4

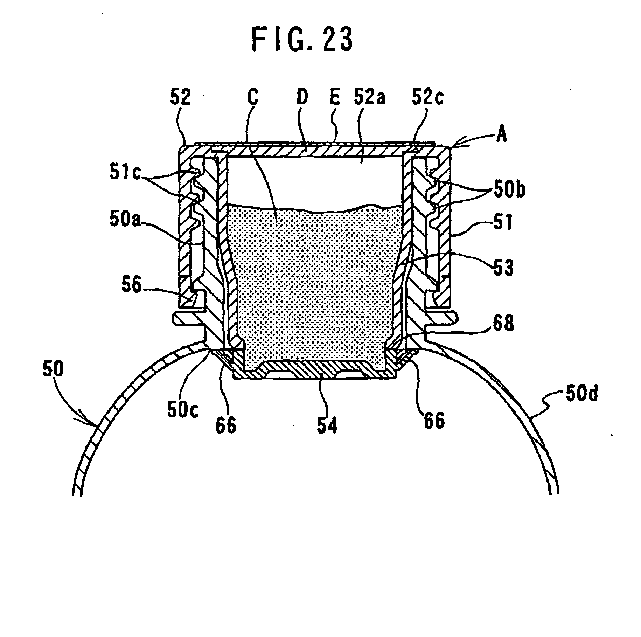

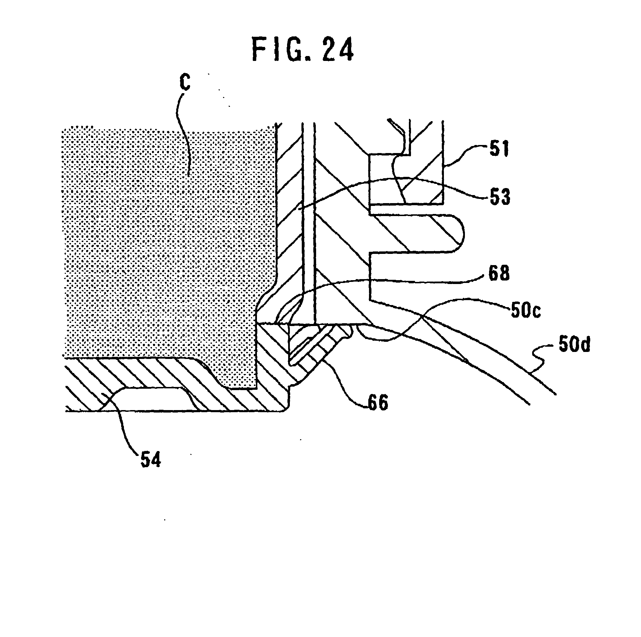

Now, a bottle cap according to a fourth example not according to the present invention is described with reference to FIGS. 23 and 24.

Also the bottle cap of the fourth example is composed of a single unitary molded part made of a hard plastic material and including a cap body A and an upper lid D in the form of a disk, and a sheet member E is adhered to the upper lid D as occasion demands.

Similarly as in the bottle cap of the third example, the cap body A is formed as a unitary member molded together with the upper lid D by simultaneous molding and includes an outer tube portion 51, a ceiling portion 52 having a circular raw material supplying entrance 52a, an inner tube portion 53 extending downwardly from the ceiling portion 52, and a bottom lid 54. However, the bottom lid 54 is formed by simultaneous molding (different material simultaneous molding) from a plastic material different from that of the inner tube portion 53.

In particular, the bottom lid 54 is formed such that, when the cap body A including the upper lid D is molded, a plastic material different from that of the cap body A is cast into the same metal mold and the bottom lid 54 is deposited and molded removably at the lower end of the inner tube portion 53. A deposition face 68 of the bottom lid 54 to the lower end of the inner tube portion 53 is formed as a very finely uneven face like a mat finished face so that the bottom lid 54 can be separated readily from the deposition face 68.

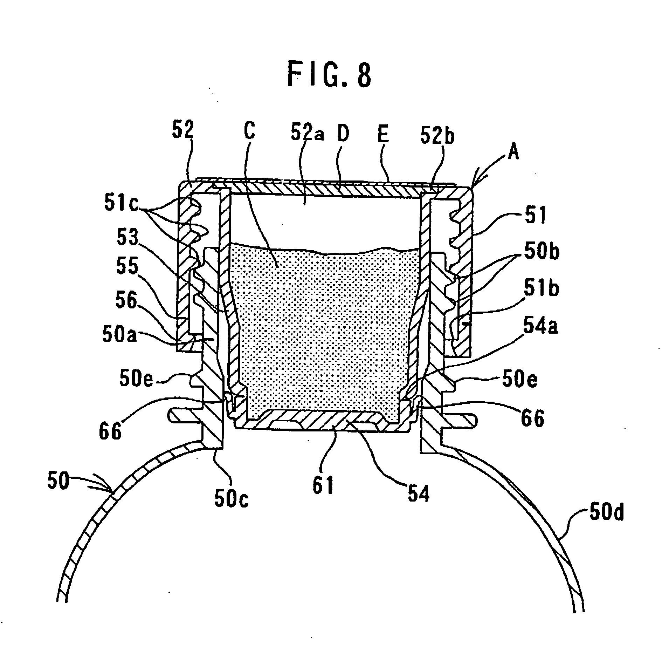

Similarly as in the bottle cap of the first example described hereinabove with reference to FIGS. 5(A) to 10, a plurality of unsealing projections 66 each in the form of a resilient pawl are provided integrally in a projecting manner obliquely upwardly and generally radially on an outer circumferential face of the bottom lid 54.

With the bottle cap of the forth embodiment having such a configuration as described above, similarly as in the bottle cap of the first example described hereinabove, as the cap body A is turned in the sealing direction to force the bottom lid 54 into the bottle mouth 50a, the unsealing projections 66 are brought into a contracted state and slidably contact with the inner circumferential face of the bottle mouth 50a. Then, when the unsealing projections 66 pass the throat portion 50c in the bottle, they restore their original open state and are engaged with the lower face of the throat portion 50c to seal the bottle mouth 50a.

If the cap body A is turned in the unsealing direction to move the inner tube portion 53 upwardly together with the outer tube portion 51 while the bottle mouth 50a is in such a sealed state as described above, then the bottom lid 54 cannot move upwardly because the unsealing projections 66 remain in engagement with the throat portion 50c of the bottle mouth 50a. Here, since the bottom lid 54 is deposited and molded removably at the lower end of the inner tube portion 53, the bottom lid 54 is separated at the deposition face 68 at the lower end of the inner tube portion 53 from the inner tube portion 53 which continues to further move upwardly, and drops into the bottle body.

It is to the bottom lid 54 may be configured otherwise such that it is not fully separated from the lower end of the inner tube portion 53 but is separated except a portion thereof such that the lower end of the inner tubular portion 53 is open while the bottom lid 54 extends downwardly at the portion thereof from the lower end of the inner tubular portion 53.

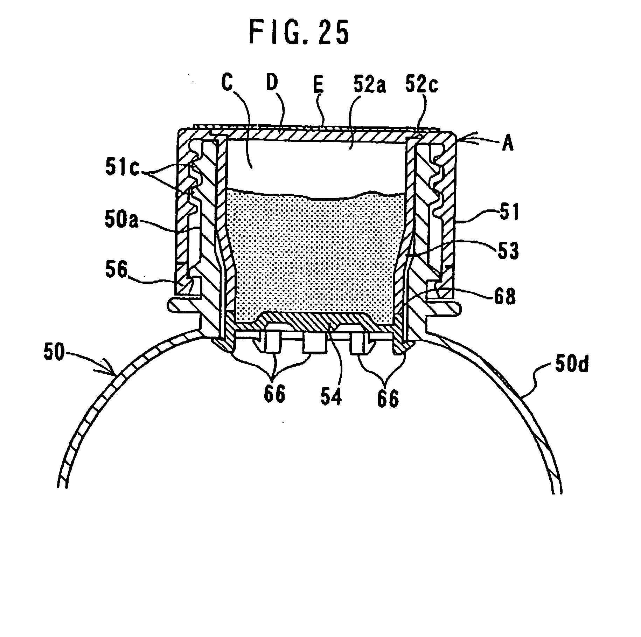

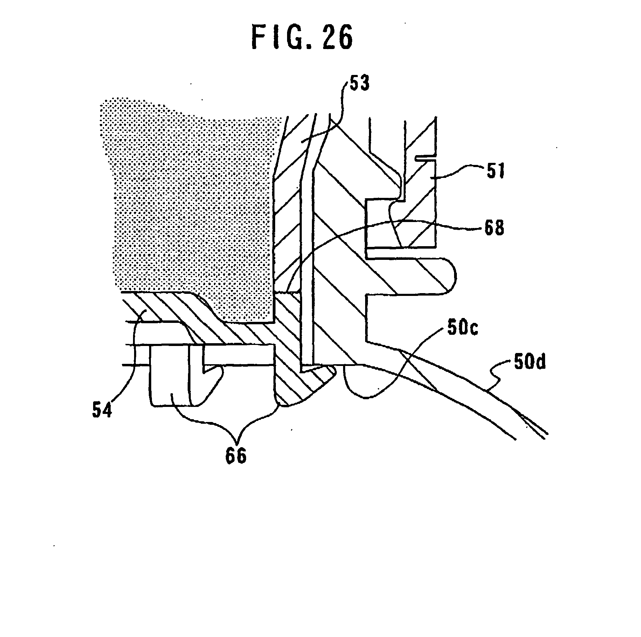

FIGS. 25 and 26 show a modification to the bottle cap of the fourth example. Referring to FIGS. 25 and 26, the modified bottle cap is configured such that a plurality of unsealing projections 66 having a V-shaped cross section are formed to extend downwardly integrally and radially on a circumferential edge of the lower face of the bottom lid 54.

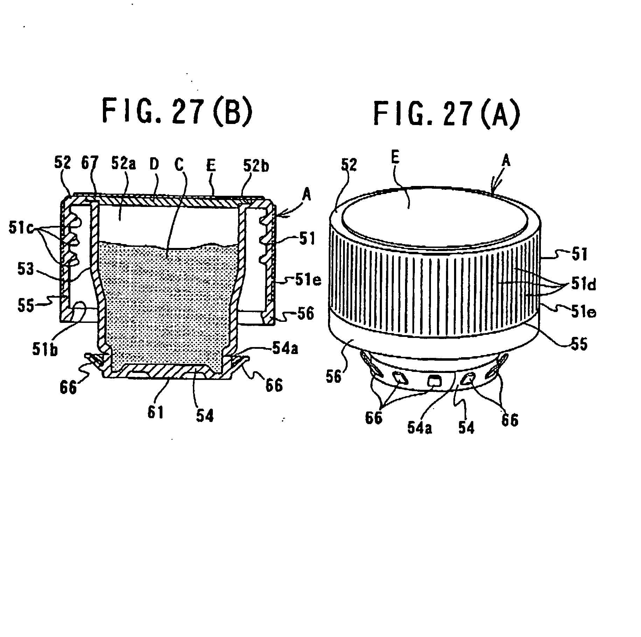

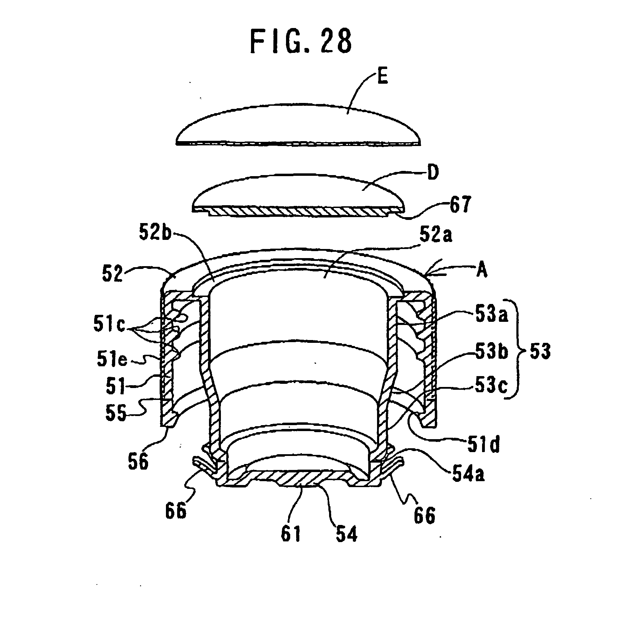

FIGS. 27(A), 27(B) and 28 show another modification to the bottle cap of the first example dscribed hereinabove with reference to FIGS. 5(A) to 10. Referring to FIGS. 27(A) to 28, the modified bottle cap is different from that of the first example only in that, although the cap body A is generally formed as a unitary molded member from a hard plastic material, a non-slip surface layer 51e having knurls 51d each in the form of a small vertical rib of a triangular cross section is formed integrally on the outer circumferential face over an entire circumference of the outer tube portion 51 of the cap body A by simultaneous molding of a soft plastic material with the outer tube portion 51 of a hard plastic material.

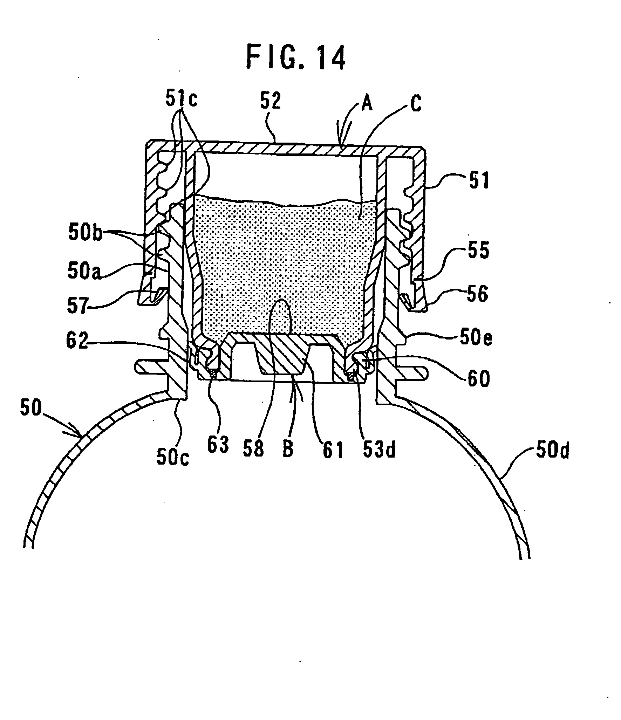

Such a non-slip surface layer 51e made of a soft plastic material as described above may be formed similarly on the outer circumferential face of the outer tube portion 51 in any of the bottle cap shown in FIGS. 11(A) and 11(B), that shown in FIGS. 12(A) to 16, that shown in FIG. 17, that shown in FIG. 19, that shown in FIGS. 20 to 22, that shown in FIGS. 23 and 24 and that shown in FIGS. 25 and 26.

While example and a preferred embodiment of the present invention have been described using specific terms, such description is for illustrative purposes only, and it is to be understood that changes and variations may be made without departing from the spirit or scope of the following claims.

## Claims

1. A bottle cap which includes
a cap body (A) having an outer tubular portion (51) having a threaded portion (51c) formed on an inner circumference thereof for engaging with a threaded portion (51b) on an outer circumference of a mouth (50a) of a bottle (50),
a ceiling portion (52) for sealing an opening of the mouth (50a) of the bottle (50),
an inner tubular portion (53) extending downwardly from said ceiling portion (52) and serving as a raw material accommodating portion, and
a bottom lid (B) molded as a separate member from said inner tubular portion (53) of said cap body (A) for separably closing up the lower end opening of said inner tubular portion (53), **characterized in that** said bottom lid (B) has a resiliently deformable unsealing projection (62) which is resiliently deformed, when said cap body (A) is turned in a sealing direction to insert said inner tubular portion (53) into the mouth (50a) of the bottle (50), to allow said bottom lid (B) to be inserted into the bottle (50) but restores, when said unsealing projection (62) passes a throat (50c) in the bottle (50), an original state and is engaged with the throat (50c), whereafter, when said cap body (A) is turned in an unsealing direction to pull out said inner tubular portion (53) from the mouth (50a) of the bottle (50), said bottom lid (B) is blocked from upward movement by the throat (50c) in the bottle (50) with which said unsealing projection (62) engages and is then separated from the lower end of said inner tubular portion (53), whereupon the lower end of said inner tubular portion (53) is opened and the raw material in said inner tubular portion (53) is discharged into the bottle, and **in that**
said bottom lid (B) has formed on a circumferential edge thereof an annular recessed portion (60) into which the lower end portion of said inner tubular portion (53) can be force fitted, and a packing (63) of a material softer than that of said annular recessed portion (60) of said bottom lid (B) is formed by simultaneous molding with said annular recessed portion (60) in said annular recessed portion (60) such that, when the lower end of said inner tube portion (53) is fitted compulsorily into said annular recessed portion (60), said packing (63) is compressed, and when said bottom lid (B) is blocked from upward movement, the lower end of said inner tubular portion (53) is pulled out from said annular recessed portion (60) of said bottom lid (B) to separate said bottom lid (B) from the lower end of said inner tubular portion (53).

2. A bottle cap as set forth in claim 1,
**characterized in that**
a raw material entrance (52a) for said inner tubular portion (53) is formed in said ceiling portion (52) of said cap body (A) and is closed up with an upper lid (D).

3. A bottle cap as set forth in claim 1,
**characterized in that**
said packing (63) is embedded in said annular recessed portion (60) in such a manner as to partly project from the inner face of said annular recessed portion (60).

4. A bottle cap as set forth in any of the claims 2 or 3,
**characterized in that**
said upper lid (D) is molded integrally with said cap body (A) in such a manner as to be connected integrally to said ceiling portion (52) of said cap body (A) by a resiliently deformable hinge portion (52c).

5. A bottle cap as set forth in any of the claims 2 to 4,
**characterized in that**
an upper face of said upper lid (D) is covered with a sheet member (E) adhered thereto together with an upper face of said ceiling portion (52) around said upper lid (D).

## Patentansprüche

1. Flaschenverschluss, der folgendes enthält:
einen Verschlusskörper (A) mit einem äußeren rohrförmigen Bereich (51) mit einem Bereich mit Gewinde (51c), der an seinem inneren Umfang ausgebildet ist, um mit einem Bereich mit Gewinde (51 b) an einem äußeren Umfang einer Mündung (50a) einer Flasche (50) in Eingriff zu stehen,
einen Obergrenzenbereich (52) zum Abdichten einer Öffnung der Mündung (50a) der Flasche (50),
einen inneren rohrförmigen Bereich (53), der sich von dem Obergrenzenbereich (52) aus nach unten erstreckt und als Rohstoff-Aufnahmebereich dient, und
einen Bodendeckel (B), der als getrenntes Element von dem inneren rohrförmigen Bereich (53) des Verschlusskörpers (A) ausgeformt ist, zum getrennten vorübergehenden Schließen der Öffnung am unteren Ende des inneren rohrförmigen Bereichs (53), **dadurch gekennzeichnet, dass** der Bodendeckel (B) einen elastisch verformbaren Öffnungsvorsprung (62) hat, der elastisch verformt wird, wenn der Verschlusskörper (A) in einer Abdichtungsrichtung gedreht wird, um den inneren rohrförmigen Bereich (53) in die Mündung (50a) der Flasche einzufügen (50), um zuzulassen, das der Bodendeckel (B) in die Flasche (50) eingefügt wird, aber dann, wenn der Öffnungsvorsprung (62) an einem Halsstück (50c) in der Flasche (50) vorbeiläuft, einen ursprünglichen Zustand wiederherstellt und in Eingriff mit dem Halsstück (50c) gelangt, wonach dann, wenn der Verschlusskörper (A) in einer Öffnungsrichtung gedreht wird, um den inneren rohrförmigen Bereich (53) aus der Mündung (50a) der Flasche (50) herauszuziehen, der Bodendeckel (B) durch das Halsstück (50c) in der Flasche (50), mit dem der Öffnungsvorsprung (62) in Eingriff steht, gegenüber einer Bewegung nach oben blockiert wird und dann von dem unteren Ende des inneren rohrförmigen Bereichs (53) getrennt wird, woraufhin das untere Ende des inneren rohrförmigen Bereichs (53) geöffnet wird und der Rohstoff in dem inneren rohrförmigen Bereich (53) in die Flasche ausgelassen wird, und dass
der Bodendeckel (B) an seinem Umfangsrand einen kreisringförmigen zurückgesetzten Bereich (60) ausgebildet hat, in den der untere Endbereich des inneren rohrförmigen Bereichs (53) gewaltsam eingepasst werden kann, und eine Dichtung (63) aus einem Material, das weicher als dasjenige des kreisringförmigen zurückgesetzten Bereichs (60) des Bodendeckels (B) ist, durch gleichzeitiges Ausformen mit dem kreisringförmigen zurückgesetzten Bereich (60) in dem kreisringförmigen zurückgesetzten Bereich (60) ausgebildet ist, so dass die Dichtung (63) dann, wenn das untere Ende des inneren rohrförmigen Bereichs (53) gewaltsam in den kreisringförmigen zurückgesetzten Bereich (60) eingepasst wird, zusammengedrückt wird, und dann, wenn der Bodendeckel (B) gegenüber einer Bewegung nach oben blockiert wird, das untere Ende des inneren rohrförmigen Bereichs (53) aus dem kreisringförmigen zurückgesetzten Bereich (60) des Bodendeckels (B) herausgezogen wird, um den Bodendeckel (B) von dem unteren Ende des inneren rohrförmigen Bereichs (53) zu trennen.

2. Flaschenverschluss nach Anspruch 1,
**dadurch gekennzeichnet, dass**
ein Rohstoffeintritt (52a) für den inneren rohrförmigen Bereich (53) in dem Obergrenzenbereich (52) des Verschlusskörpers (A) ausgebildet ist und mit einem oberen Deckel (D) vorübergehend verschlossen ist.

3. Flaschenverschluss nach Anspruch 1,
**dadurch gekennzeichnet, dass**
die Dichtung (63) in dem kreisringförmigen zurückgesetzten Bereich (60) auf derartige Weise eingebettet ist, dass sie von der Innenseite des kreisringförmigen zurückgesetzten Bereichs (60) teilweise vorsteht.

4. Flaschenverschluss nach einem der Ansprüche 2 oder 3,
**dadurch gekennzeichnet, dass**
der obere Deckel (D) mit dem Verschlusskörper (A) auf derartige Weise einstückig ausgebildet ist, dass er durch einen elastisch verformbaren Gelenkbereich (52c) einstückig mit dem Obergrenzenbereich (52) des Verschlusskörpers (A) verbunden ist.

5. Flaschenverschluss nach einem der Ansprüche 2 bis 4,
**dadurch gekennzeichnet, dass**
eine Oberseite des oberen Deckels (D) mit einem Bogen- bzw. Blech- bzw. Folienelement (E) bedeckt ist, das zusammen mit einer Oberseite des Obergrenzenbereichs (52) um den oberen Deckel (D) daran angeheftet bzw. angeklebt ist.

## Revendications

1. Capsule de bouteille, comprenant
un corps de capsule (A) ayant une portion tubulaire extérieure (51) ayant une portion filetée (51 c) formée de sa circonférence intérieure destinée à entrer en prise avec une portion filetée (51b) sur une circonférence extérieure d'un goulot (50a) de bouteille (50),
une portion plafond (52) pour sceller une ouverture du goulot (50a) de la bouteille (50),
une portion tubulaire intérieure (53) s'étendant vers le bas à partir de ladite portion plafond (52) et servant de portion pour recevoir un matériau brut, et
un couvercle inférieur (B) moulé en tant qu'élément séparé de ladite portion tubulaire intérieure (53) dudit corps de capsule (A) pour fermer complètement l'ouverture extrême inférieure de la portion tubulaire intérieure (53), **caractérisée en ce que** ledit couvercle inférieur (B) a une saillie de descellement (62) déformable de façon résiliente qui est déformée de façon résiliente quand ledit corps de capsule (A) est tourné dans une direction de scellement pour insérer ladite portion tubulaire intérieure (53) dans le goulot (50a) de la bouteille (50) pour permettre audit couvercle inférieur (B) d'être ingéré dans la bouteille (50) mais rétablit, quand ladite saillie de descellement (62) franchit une gorge (50c) dans la bouteille (50), un état initial et est mise en prise avec la gorge (50c), après quoi, quand ledit corps de capsule (A) est tourné dans une direction de descellement pour extraire ladite portion tubulaire intérieure (53) du goulot (50a) de la bouteille (50), ledit couvercle inférieur (B) est bloqué et empêché de monter par la gorge (50c) dans la bouteille (50) avec laquelle ladite saillie de descellement (62) entre en prise et puis est séparé de l'extrémité inférieure de ladite portion tubulaire intérieure (53), à l'occasion de quoi l'extrémité inférieure de ladite portion tubulaire intérieure (53) est ouverte et le matériau brut dans ladite portion tubulaire intérieure (53) est déchargé dans la bouteille, et **en ce que** ledit couvercle inférieur (B), sur son bord circonférentiel, possède une portion annulaire en retrait (60) dans laquelle la portion extrême inférieure de ladite portion tubulaire intérieure (53) peut être montée en force, et une garniture d'étanchéité (63) réalisée dans un matériau plus tendre que celui de ladite portion annulaire en retrait (60) dudit couvercle inférieur (B) est formée par moulage simultané avec ladite portion annulaire en retrait (60) dans ladite portion annulaire en retrait (60) de sorte que, quand l'extrémité inférieure de ladite portion tubulaire intérieure (53) est montée de façon coercitive dans ladite portion annulaire en retrait (60), ladite garniture d'étanchéité (63) est compressée, et quand ledit couvercle inférieur (B) est bloqué et empêché de monter, l'extrémité inférieure de ladite portion tubulaire intérieure (53) est extraite de ladite portion annulaire en retrait (60) dudit couvercle inférieur (B) pour réaliser la séparation entre ledit couvercle inférieur (B) et l'extrémité inférieure de ladite portion tubulaire intérieure (53).

2. Capsule de bouteille selon la revendication 1,
**caractérisée en ce que**
une entrée de matériau brut (52a) pour ladite portion tubulaire intérieure (53) est formée dans ladite portion plafond (52) dudit corps de capsule (A) et est fermée complètement par un couvercle supérieur (D).

3. Capsule de bouteille selon la revendication 1,
**caractérisée en ce que**
ladite garniture d'étanchéité (63) est noyée dans ladite portion annulaire en retrait (60) de façon à dépasser partiellement de la face inférieure de ladite portion annulaire en retrait (60).

4. Capsule de bouteille selon l'une quelconque des revendications 2 ou 3,
**caractérisée en ce que**
ledit couvercle supérieur (D) est moulé d'une seule pièce avec ledit corps de capsule (A) de façon à être raccordé d'une seule pièce à ladite portion plafond (52) dudit corps de capsule (A) par une portion de charnière (52c) déformable de façon résiliente.

5. Capsule de bouteille selon l'une quelconque des revendications 2 à 4,
**caractérisée en ce que**
une face supérieure dudit couvercle supérieur (D) est couverte d'un élément de feuille (E) qui y adhère en même temps qu'une face supérieure de ladite portion plafond (52) autour dudit couvercle supérieur (D).
